# EUROPÄISCHE PATENTSCHRIFT

(11) **EP 3 445 998 B1**
(45) Veröffentlichungstag und Bekanntmachung des Hinweises auf die Patenterteilung: **17.06.2020**
(21) Anmeldenummer: 17719235.8
(22) Anmeldetag: 21.04.2017
(51) Int. Cl.: F16G 13/16, H02G 11/00

(54) **KETTENGLIED FÜR ENERGIEFÜHRUNGSKETTE UND ENERGIEFÜHRUNGSKETTE**
CHAIN LINK FOR AN ENERGY GUIDE CHAIN, AND ENERGY GUIDE CHAIN
MAILLON DE CHAÎNE POUR CHAÎNE PORTE-CÂBLES ET CHAÎNE PORTE-CÂBLES

(30) Priorität: 22.04.2016 DE 202016102154 U
(43) Veröffentlichungstag der Anmeldung: 27.02.2019
(73) Patentinhaber: Igus GmbH, 51147 Köln (DE)
(72) Erfinder: DOMMNIK, Jörg, 53819 Neunkirchen-Seelscheid (DE); STRACK, Stefan, 53639 Königswinter (DE); JAEKER, Thilo-alexander, 53757 Sankt Augustin (DE); HERMEY, Andreas, 53773 Hennef (DE)
(74) Vertreter: Lippert Stachow Patentanwälte Rechtsanwälte
(86) Internationale Anmeldenummer: PCT/EP2017/059530
(87) Internationale Veröffentlichungsnummer: WO 2017/182635

(56) Entgegenhaltungen:
- DE-A1- 19 645 403
- US-A1- 2013 212 998

## Beschreibung

Die Erfindung betrifft ein Kettenglied für eine Energieführungskette gemäß dem Oberbegriff von Anspruch 1 sowie eine Energieführungskette mit derartigen Kettengliedern, wobei das Kettenglied wenigsten einen, vorzugsweise zwei gegenüberliegende, die Kettenlaschen miteinander verbindende Querstege aufweist.

Gattungsgemäße Kettenglieder sind beispielsweise aus der DE 4313075 A1 bekannt. Durch die gelenkige Verbindung des mindestens einen Quersteges mit den Kettenlaschen ist das Kettenglied bei der Einführung von Kabeln, Leitungen und dergleichen in den Kettengliedinnenraum (bzw. in den Innenraum der Energieführungskette) einfach handhabbar, nämlich durch Verschwenkung des Quersteges in seine Öffnungsposition, ohne dass der Quersteg vollständig von dem Kettenglied zu demontieren ist und damit als Einzelteil vorliegen würde. Dies ist insbesondere bei Kettengliedern nur geringer Baugröße von Vorteil, da dann die vergleichsweise kleinen Querstege nur relativ umständlich handhabbar sind und eine erneute Festlegung derselben an den Kettenlaschen sehr umsichtig und damit zeitaufwändig vorzunehmen ist.

Insbesondere bei Kettengliedern nur geringer Baugröße besteht jedoch verschiedentlich das Problem, dass sich beim Betrieb der entsprechenden Energieführungskette die in den Kettengliedern geführten Kabel, Leitungen usw. an die Innenseite des Quersteges andrücken und den Quersteg nach außen wölben können. Dies ist insbesondere bei einer Verfahrung der Energieführungskette im Umlenkbereich derselben gegeben, wobei in Anordnung der Energieführungskette der Umlenkbereich ein Obertrum und ein Untertrum der Kette miteinander verbindet, oder ggf. auch bei anderen Bereichen der Energieführungskette, deren Krümmungsradius bei der Kettenverfahrung ändert. Das Auswölben der Querstege durch die Kraftbeaufschlagung mit den geführten Kabeln, Leitungen usw. birgt jedoch zum einen die Gefahr, dass sich zumindest an einem der Endbereiche der Querstege die Gelenkverbindung zwischen Quersteg und Kettenlasche löst, so dass der Betrieb der Energieführungskette dann unterbrochen werden muss. Ferner bedingt die Auswölbung des Quersteges, dass sich das Kettenglied insgesamt in seiner Querschnittsgeometrie deformieren kann, was zu einem unruhigeren Lauf der Energieführungskette und einem erhöhten Verschleiß der Gelenkbereiche zwischen den benachbarten Kettengliedern führen kann. Diese Probleme ergeben sich insbesondere bei Kettengliedern nur geringer Baugröße, welche somit auch nur eine vergleichsweise geringe Materialstärke der Kettenlaschen und Querstege aufweisen.

Die DE 20 2011 004 785 U1 beschreibt eine Energieführungskette mit Kettengliedern, deren Querstege mittels eines Schwenkhorns verschwenkbar mit den Kettenlaschen verbunden sind und an halteschaftförmigen Gelenkzapfen der Laschen rastend angreifen. Die Halteschafte der Laschen sind im Querschnitt über einen gewissen Bogen mit einer zur Laschenmitte gewandten Abstufung bzw. Aussparung versehen. Die axialen Kanten der Aussparung werden von Rastnasen des Schwenkhorns hintergriffen.

Die US 2013/0212998 A1 beschreibt gattungsgemäße Kettenglieder einer Energieführungskette, wobei die Gelenkverbindung zwischen Quersteg und Kettenlasche einen im wesentlichen zylindrischen Gelenkzapfen mit einem Radius R1 über zumindest einen Teilumfang des Zapfens an einem der korrespondieren Bauteile von Quersteg und Kettenlasche und eine im wesentlichen zylinderförmige Zapfenaufnahme an dem anderen der beiden korrespondierenden Bauteile aufweist. Der Gelenkzapfen weist über einen Teilbereich seiner Länge an der den Schmalseiten abgewandten Zapfenseite zumindest eine Aussparung auf, welche von der Zylinderfläche des Zapfens zurückspringt. Die Zapfenaufnahme weist zumindest eine Rastnase auf, welche von dem zylindrischen Bereich der Zapfenaufnahme mit Radius R1 vorspringt und in die Aussparung (9) eingreift.

Der Erfindung liegt daher die Aufgabe zu Grunde, ein Kettenglied für Energieführungsketten bereitzustellen, welche insbesondere bei Kettengliedern mit nur geringer Baugröße einen sichereren Betrieb der Energieführungskette ermöglicht, wobei die Handhabung des Quersteges beim Öffnen und/oder Schließen des Kettengliedes und/oder bei der Einführung von Kabeln, Leitungen oder dergleichen in das Kettengliedinnere einfach zu handhaben ist.

Diese Aufgabe wird durch ein Kettenglied gemäß Anspruch 1 gelöst.

Erfindungsgemäß weist der Gelenkzapfen über nur einen Teilbereich seiner Länge an der den Schmalseiten abgewandten Zapfenseite zumindest eine Aussparung auf, welche von der Zylinderfläche des Zapfens zurückspringt, und in welche die Rastnase der Zapfenaufnahme, welche von dem zylindrischen Bereich der Zapfenaufnahme mit Radius R1 vorspringt, insbesondere in Schließposition des Quersteges (oder über dessen gesamten Verschwenkwinkel) eingreift. Ferner ist der Gelenkzapfen in einem anderen Teilbereich, welcher mit der Zapfenaufnahme zusammenwirkt, zylindrisch ausgebildet ist, weist also einen kreisbogenförmigen Querschnitt auf. In der Schließposition des Quersteges liegt die Rastnase somit vorzugsweise an einem von dem zylindrischen Bereich des Gelenkzapfens zurückspringenden Bereich an oder hintergreift diesen. Dies bedingt, dass die Rastverbindung zwischen Zapfenaufnahme und Gelenkzapfen zusätzlich gesichert wird und ein unerwünschtes Lösen des Quersteges in dem besagten Gelenkbereich beim Betrieb der Energieführungskette wesentlich erschwert wird, wodurch ein sichererer Betrieb der Kette gewährleistet ist. Zwar wird an sich auch bei herkömmlichen Kettengliedern der Quersteg mit einer zylindrischen Zapfenaufnahme auf einen zylindrischen Gelenkzapfen unter Ausbildung einer Rastverbindung befestigt. Bei der erfindungsgemäßen Ausgestaltung des Kettengliedes wird jedoch die Rastverbindung zwischen Zapfenaufnahme und Gelenkzapfen bei gleichbleibender Umfangserstreckung der Zapfenaufnahme um den Gelenkzapfen wesentlich stabilisiert. Die Rastnase der Zapfenaufnahme kann hierbei am Endbereich der Umfangserstreckung der Aussparung an dem Gelenkzapfen anliegen. Ferner kann die Rastnase am Endbereich der Aussparung verhakt sein, insbesondere in Bezug auf die Öffnungsrichtung beim Verschwenken des Quersteges. Hierzu kann die Aussparung zumindest an dem der Rastnase zugewandten Endbereich (oder an beiden Endbereichen) einen konvex gekrümmten Bereich oder einen sich in radialer Richtung des Gelenkzapfens eben erstreckenden Bereich aufweisen, an welchem in Schließposition des Quersteges die Rastnase anliegt, oder sogar eine Hinterschneidung, in welche die Rastnase eingreift. Hierdurch können auf die Innenseite des Quersteges wirkende Kräfte, beispielsweise durch an den Quersteg andrückende Kabel oder Leitungen besonders günstig aufgefangen werden. Ferner wird hierdurch die Öffnungsweite der Zapfenaufnahme für den Gelenkzapfen nur unwesentlich oder praktisch nicht verengt, so dass das Aufrasten der Zapfenaufnahme auf den Gelenkzapfen zur Befestigung des Quersteges an der Kettenlasche nur unwesentlich oder praktisch nicht erschwert wird, was insbesondere bei kleinen Kettengliedern mit geringen Wandstärken von besonderem Vorteil ist. Zudem wird bei der erfindungsgemäßen Ausgestaltung des Kettengliedes der zylindrische Bereich des Gelenkzapfens, welcher auch als Führung für die Zapfenaufnahme beim Verschwenken des Quersteges dient, nicht nach radial außen erweitert, wodurch ein Verschwenken des Quersteges behindert werden könnte oder was ansonsten auch zu einem unerwünschten Lösen des Quersteges vom Gelenkzapfen führen könnte, wenn der Quersteg über ein gewisses Ausmaß hinaus in Richtung auf seine Öffnungsposition verschwenkt wird. Zudem hat sich herausgestellt, dass das erfindungsmäße Kettenglied eine erhöhte Lebensdauer aufweist und ein gleichmäßigeres und ruhigeres Verfahren der Energieführungskette ermöglicht.

Bei dem erfindungsgemäßen Kettenglied liegen somit zwei unterschiedliche Rastbereiche des Gelenkzapfens mit der Zapfenaufnahme vor: zum einen der Rastbereich mit der Zapfenaussparung, welche von der Zylinderfläche des Zapfens mit Radius R1 zurückspringt und in welche die Rastnase der Zapfenaufnahme, welche von dem zylindrischen Bereich der Zapfenaufnahme mit Radius R1 vorspringt, eingreift, zum anderen der andere (zweite) Teilbereich des Gelenkzapfens, welcher zylindrisch mit Radius R1 ausgebildet ist und welcher mit der Zapfenaufnahme mit Radius R1 zusammenwirkt. Da der genannte andere (zweite) Teilbereich des Gelenkzapfens also einen kreisbogenförmigen Querschnitt mit Radius R1 aufweist, ist eine besonders exakte und stabile Führung des Quersteges bei dessen Verschwenkung gegeben, da über den gesamten Verschwenkwinkel des Quersteges die Zapfenaufnahme mit Radius R1 über deren gesamte Umfangserstreckung um den Zapfen mit Radius R1 geführt ist. Andererseits wird durch die zusätzliche Rastverbindung durch die von der Zapfenaufnahme vorspringende Rastnase, welche in die Aussparung des Zapfens eingreift, der Quersteg in seiner Schließposition besonders gesichert, insbesondere gegenüber einer Auswölbung durch in der Kette geführten Kabeln, Leitungen und dergleichen, welche beim Betrieb der Energieführungskette vom Ketteninneren her an den Quersteg drücken und ein unbeabsichtigte Lösen des Quersteges bewirken können. Es hat sich aber im Zuge der Erfindung herausgestellt, dass wenn allein der Quersteg durch die erstgeannte Rastverbindung mit zurückspringender Aussparung und von der Zapfenaufnahme vorspringender Rastnase gehaltert ist, dies zu einer Beeinträchtigung der Verschwenkeigenschaften des Quersteges führt, insbesondere bei schneller Verschwenkung und/oder bei Kräften auf den Quersteg während dessen Verschwenkung oder in einer zumindest teilweise geöffneten Position, wie bspw. bei Querkräften und/oder Torsionskräften. Dies wird im Lichte der Erfindung darauf zurückgeführt, dass durch die zurückspringende Aussparung, in welche lediglich eine Rastnase der Zapfenaufnahme eingreift, die exakte Halterung und Stabilisierung des Quersteges am Zapfen destabilisiert wird, insbesondere gegenüber Quer- und/oder Torsionskräften auf den Quersteg, da die Anlagebereiche von Zapfen und Zapfenaufnahme miteinander mit Radius R1 verringert werden. Es versteht sich, das beispielsweise bei teilweise geöffnetem Quersteg die in die Aussparung eingreifende Rastnase Quer- und/oder Torsionskräften nur geringen Widerstand entgegensetzt, im Vergleich zu den beiden Wirkbereichen von Zapfen und Zapfenaufnahme mit Radius R1. Hierbei ist zu berücksichtigen, dass Energieführungsketten oftmals auch unter widrigen Umständen mit Kabeln und dergleichen zu bestücken sind, bspw. bei einer manuellen Bestückung einer an einer Maschine angekoppelten Kette zu deren Reparatur oder Wartung, einer manuellen Bestückung der Kette im Akkord usw., wo auf die Querstege beim Öffnen oder Schließen derselben oftmals auch unkontrollierte Kräfte einwirken können. Die beiden genannten Rastbereiche des Quersteges ergänzen sich somit in besonderer Weise, um eine vorteilhafte Energieführungskette bereitzustellen, wobei der Quersteg zudem leicht zu öffnen und zu schließen ist. Ferner können unter Umständen auch Betrieb der Kette mit geschlossenem Quersteg auf diesen Quer- und/oder Torsionskräfte einwirken, bspw. auch durch das Anschlagen von in der Kette geführten Kabeln und dergleichen an den Quersteg.

Aufgrund der zylindrischen Ausbildung der Zapfenbereichs mit Radius R1 und demselben Radius R1 der Zapfenaufnahme wirken dieser Teilbereich des Zapfens und die Zapfenaufnahme spielfrei und spaltfrei zusammen. Im Bereich des zweiten, zylindrischen Teilbereich des Zapfens liegen somit Zapfen und Zapfenaufnahme vollflächig aneinander an, und dies über den gesamten Verschwenkwinkel des Quersteges. Hierdurch ist beim Verschwenken des Quersteges auch unter Berücksichtigung der ersten Rastverbindung zwischen Zapfen und Zapfenaufnahme mit Aussparung und in diese eingreifender Rastnase eine besonders stabile Führung des Quersteges durch den Gelenkzapfen gegeben, insbesondere auch bei Quer- und/oder Torsionskräften auf den Quersteg in seiner teilweise oder vollständig geöffneten Öffnungsposition aber auch in seiner Schließposition.

Vorzugsweise wirkt der andere, zylindrisch ausgebildete Teilbereich des Zapfens mit der Zapfenaufnahme rastend zusammen, wodurch eine besonders stabile und exakte Festlegung des Quersteges an der Lasche sowohl in der Schließposition als auch beim Verschwenken des Quersteges gegeben ist. Die Zapfenaufnahme erstreckt sich hierzu über mehr als 180° des Zapfenumfanges, bspw. über ≥ 220° oder ≥ 280° desselben. Nach einer besonders bevorzugten Ausführungsform ist die Aussparung und die in diese eingreifende Rastnase nur beabstandet von den Endbereichen des Gelenkzapfens angeordnet, wobei der Gelenkzapfen an seinen beiden Endbereichen zylindrisch ausgebildet ist. Die zurückspringende Aussparung des Zapfens ist also im mittleren Bereich des Zusammenwirkungsbereichs von Zapfen und Zapfenaufnahme angeordnet, vorzugsweise mittig in diesem. Durch die besonders exakte Führung der Zapfenaufnahme am Zapfen durch die endseitigen und somit beabstandeten Bereiche mit Radius R1 ist der Quersteg besonders gegen Quer- und/oder Torsionskräfte stabilisiert, sowohl in einer teilweise oder vollständig geöffneten Position des Quersteges als auch in seiner Schließstellung, wobei sich dies auch für eine exakte Führung des Quersteges bei dessen Verschwenkung als besonders günstig herausgestellt hat, so dass der Quersteg leicht, exkat und verschleißarm verschwenkbar ist. Ferner ist hierdurch der mittlere Bereich des Quersteges, welcher durch von dem Ketteninneren her an den Quersteg drückende Kabel oder dergleichen am häufigsten belastet wird, besonders stabilisiert. Zudem ist diese Ausführungsform spritzgusstechnisch besonders günstig herstellbar.

Alternativ kann zumindest eine Aussparung und die in diese eingreifende Rastnase oder mehrere Aussparungen und die jeweils in diese eingreifende Rastnasen nicht nur beabstandet von den Endbereichen des Gelenkzapfens angeordnet sein, wobei der Gelenkzapfen in einem andere Teilbereich oder zylindrisch ausgebildet ist. Gegebenenfalls kann hierbei der Gelenkzapfen auch in mehreren anderen Teilbereich zylindrisch ausgebildet sein. Es kann zumindest eine Aussparung und die in diese eingreifende Rastnase an zumindest einem oder an beiden Endbereichen des Gelenkzapfens angeordnet sein, wobei der Gelenkzapfen an einem Teilbereich, welcher von einem oder beiden Endbereichen des Zapfens verschieden ist, zylindrisch (also vollumfänglich mit Radius R1) ausgebildet ist. Vorzugsweise sind an beiden Endbereichen des Gelenkzapfens die zurückspringende Aussparung und in diese eingreifende Rastnase vorgesehen. Vorzugsweise ist der zylindrische Teilbereich des Zapfens mit Radius R1, welcher sich also vollumfänglich um den Zapfen erstreckt, im mittleren Bereich des Zapfens, besonders bevorzugt mittig am Zapfen, angeordnet. Dies kann beispielsweise besonders vorteilhaft sein, wenn die Querstegbreite relativ zur Kettengliedlänge vergleichsweise klein ist, und somit die seitlichen Randbereiche des Quersteges durch vom Ketteninneren her andrückende Kabel oder dergleichen stärker belastet werden.

Gegebenenfalls können auch zwei oder mehr zurückspringende Zapfenaussparungen mit in diese eingreifenden Rastnasen der Zapfenaufnahme und/oder mehr als zwei andere (zweite) Teilbereiche des Zapfens mit zylindrischer Form an einem Haltebereich eines Quersteges vorgesehen sein, welche bspw. auch abwechselnd nebeneinander angeordnet sein können. Gegebenenfalls kann an einem Haltebereich eines Quersteges auch nur eine zurückspringende Zapfenaussparungen mit in diese eingreifender Rastnase der Zapfenaufnahme und nur ein anderer (zweiter) Teilbereich des Zapfens mit vollumfänglichen Radius R1 vorgesehen sein. Allgemein können somit der erste und/oder der zweite der beiden genannten verschiedenen Bereiche des Gelenkzapfens und der Zapfenaufnahme mehrere voneinander beabstandete Abschnitte ausbilden.

Der Bereich des Zapfens mit zurückspringender Aussparung und der zweite zylindrische Zapfenbereich können sich jeweils unabhängig voneinander über 10-90% oder 20-80% oder 35-65%, bspw. 40-60%, über die Breitenerstreckung der Zapfenaufnahme ausdehnen.

Vorzugsweise sind die Aussparung und der Gelenkzapfen über den Teilbereich der jeweiligen Längserstreckung, in welchem Zapfen und Zapfenaufnahme zusammenwirken, spiegelsymmetrisch zur Längsachse des Quersteges ausgebildet. Hierdurch ist eine besonders günstige Kräfteverteilung bei dem Andrücken von Kabeln oder dergleichen an die Innenseite des Quersteges gegeben, insbesondere da der Ort der Kraftbeaufschlagung des Quersteges beim Betrieb der Kette unvorhersehbar variieren kann, und in verschiedenen Bestückungssituationen der Kette eine einfache und sichere Handhabung des Quersteges gegeben.

In Kombination mit obigen Ausgestaltung kann ein Kettenglied ausgebildet sein, bei welchem zusätzlich zu der Gelenkverbindung zwischen Gelenkzapfen und Zapfenaufnahme mit Radius R1 Rastmittel vorgesehen sind, welche zwischen dem Quersteg in seiner Schließstellung und der Kettenlasche rastend zusammenwirken und dass diese zusätzlichen Rastmittel den Verschwenkwinkel des Quersteges in dessen Öffnungsposition begrenzen. Durch dieses zusätzliche Rastmittel wird ein unbeabsichtigtes Öffnen des Quersteges erschwert; durch die Ausbildung des Rastmittels als Anschlag in Öffnungsposition des Quersteges wird zudem die Handhabung des Kettengliedes bei einer Bestückung desselben mit oder Entnahme von Kabeln, Leitungen usw. wesentlich erleichtert. Das Rastmittel kann oben genannte Rastnase der Zapfenaufnahme umfassen. Das Widerlager (Gegenrastmittel) der Rastnase kann durch den einen Teilbereich des Gelenkzapfens, bspw. einen Endbereich oben genannter Aussparung ausgebildet sein. Allgemein kann der Anschlag an der innenliegenden Seite der Zapfenaufnahme angeordnet sein.

Vorzugsweise weist die Aussparung eine bogenförmige Oberflächenkontur auf, mit gleicher Krümmungsrichtung wie der Zylinderfläche des Zapfens. Dies ist von besonderem Vorteil, wenn die Rastnase der Zapfenaufnahme bei der Verschwenkung des Quersteges zumindest über einen Teil des Verschwenkwinkels des Quersteges den Gelenkzapfen im Bereich der Aussparung kontaktiert bzw. an diesem anliegt.

Allgemein im Rahmen der Erfindung kann die Rastnase zumindest über einen Teilbereich des Verschwenkwinkels des Quersteges an dem Gelenkzapfen anliegen, vorzugsweise im Bereich der Ausnehmung desselben, beispielsweise in den Endbereichen der Ausnehmung, bezogen auf die Umfangserstreckung der Ausnehmung um den Gelenkzapfen. Vorzugsweise liegt die Rastnase über den gesamten Verschwenkwinkels des Quersteges an dem Gelenkzapfen an, insbesondere im Bereich der Ausnehmung desselben.

Besonders bevorzugt ist die Oberflächenkontur der Aussparung kreisbogenförmig mit Radius R2 ausgebildet, so dass bei Anliegen der Rastnase an der zylindrischen Oberflächenkontur des Gelenkzapfens im Bereich der Aussparung eine einfache Verschwenkung des Quersteges ermöglicht ist, ohne dass hierbei eine Deformation der Rastnase oder eines Bereiches der Zapfenaufnahme gegeben ist. Der Radius R2 ist hier kleiner als der Radius R1 des zylindrischen Bereichs des Gelenkzapfens.

Die Aussparung kann allgemein als Nut ausgebildet sein, vorzugsweise mit konstanter Nuttiefe über die Erstreckung der Aussparung in Umfangsrichtung des Gelenkzapfens.

Die Aussparung befindet sich allgemein im Rahmen der Erfindung bevorzugt unterhalb einer durch den Radius R1 definierten Achse des Gelenkzapfens (Zylinderachse), wobei die Gelenkachse in der genannten Ebene liegt und sich diese Ebene parallel zur Längserstreckung der Querstege und senkrecht zu der Hauptebene der Kettenlaschen erstreckt. Die Hauptebene der Kettenlaschen verläuft hierbei parallel zu den Außenflächen und Innenflächen der Kettenlaschen.

Der Gelenkzapfen ist jeweils vorzugsweise an der Kettenlasche angeordnet, die Zapfenaufnahme an dem Quersteg.

Die Ausnehmung kann sich symmetrisch zu einer Mittelebene des Gelenkzapfens erstrecken, welche die Zylinderachse des Gelenkzapfens beinhaltet, wobei die Zapfenmittelebene parallel zur Hauptmittelebene der Kettenlaschen angeordnet sein kann.

Besonders bevorzugt sind die Krümmungsachsen der Aussparung und der Zylinderfläche (also der zylindrischen Außenfläche) mit Radius R1 des Zapfens koaxial zueinander angeordnet. Die zylindrische Begrenzungsfläche der Zapfenaufnahme sowie die Begrenzungskanten der Rastnase werden somit bei Verschwenkung des Quersteges um dessen Verschwenkachse auf konzentrischen Radien verfahren. Die Zylinderachse des Gelenkzapfens kann somit allgemein im Rahmen der Erfindung die Verschwenkachse des Quersteges darstellen. Hierdurch ist eine einfache Verschwenkung des Quersteges ermöglicht, ohne dass diese durch die in die Aussparung eingreifende Rastnase oder insbesondere auch einer im Bereich der Aussparung an dem Gelenkzapfen anliegenden Rastnase behindert wird.

Vorzugsweise ist die in die Aussparung eingreifende Rastnase an der der Kettenlaschenaußenseite zugewandten Seite der Zapfenaufnahme angeordnet. Hierdurch wird ein Lösen des Quersteges bei innenseitiger Druckbeaufschlagung desselben durch Kabel, Leitungen oder dergleichen besonders wirksam erschwert oder verhindert. Bei Kraftausübung auf die Quersteginnenseite, welche eine Auswölbung des Quersteges bewirken könnte, wird aufgrund der genannten Geometrie die Rastnase in Richtung auf die Achse des Gelenkzapfens gedrückt und somit die Rastverbindung zwischen Rastnase und Gelenkzapfen zusätzlich gesichert bzw. verkrallt. Ferner ist hierdurch eine Verschwenkung des Quersteges bei dessen Öffnung nicht behindert, da dann die vorzugsweise unterhalb der Achse des Gelenkzapfens angeordnete Rastnase in Richtung auf die jeweilige Lascheninnenseite verschwenkt wird und innerhalb der Aussparung angeordnet ist.

Der Quersteg kann im Bereich der Zapfenaufnahme und/oder an seinen Endbereichen oder gegebenenfalls auch über seine gesamte Erstreckung an seiner Außenseite (der vom Kettenglied wegweisenden Seite) durchbrechungsfrei ausgebildet sein. Dies verhindert beispielsweise Schmutzablagerungen (bspw. von Abrieb) im Bereich einer Durchbrechung, so dass die Energieführungskette in schmutzbeaufschlagter Umgebung oder unter Reinraumbedingungen vorteilhaft einsetzbar ist.

Es versteht sich, dass sich allgemein bevorzugt die Aussparung zumindest über dieselbe Winkelerstreckung erstreckt, wie der Verschwenkwinkel des Quersteges bei dessen Überführung von seiner Schließposition in seine Öffnungsposition, wobei die Aussparung auch eine größere Winkelerstreckung aufweisen kann. Die Winkelerstreckung bezieht sich hierbei auf die Umfangsrichtung des Gelenkzapfens.

Besonders bevorzugt sind die Aussparung und die in diese eingreifende Rastnase nur beabstandet von den Endbereichen des Gelenkzapfens angeordnet, wobei der Gelenkzapfen an seinen beiden Endbereichen zylindrisch mit Radius R1 ausgebildet ist. Hierbei ist eine stabile Führung des Quersteges bei dessen Verschwenkung durch die beabstandeten zylindrischen Bereiche des Gelenkzapfens gegeben. Die Zylinderabschnitte des Gelenkzapfens an dessen Endbereichen können unmittelbar endseitig an den Endbereichen des Gelenkzapfens angeordnet sein und somit mit den Endbereichen der sich in Zapfenlängsrichtung erstreckenden Zapfenaufnahme bei der Verschwenkung des Quersteges in Anlage stehen. Gegebenenfalls können die Zylinderbereiche des Gelenkzapfens mit Radius R1 auch von den Endbereichen der Zapfenaufnahme, vorzugsweise nur geringfügig, beabstandet sein. Vorzugsweise ist zugleich die Rastnase der Zapfenaufnahme bei der Verschwenkung des Quersteges in Anlage mit dem Gelenkzapfen im Bereich der Aussparung, wodurch die Stabilität der Gelenkverbindung zwischen Quersteg und Kettenlasche zusätzlich erhöht wird. Besonders bevorzugt ist ein Anschlag zur Begrenzung des Verschwenkwinkels des Quersteges in seiner Öffnungsposition vorgesehen. Hierdurch wird die Handhabung des Kettenliedes bei dem Einführen von Kabeln, Leitungen oder dergleichen in den Kettengliedinnenraum bzw. die Entnahme der genannten Kabel, Leitungen usw. aus dem Kettengliedinnenraum erleichtert. Besonders bevorzugt ist ein Endbereich der Aussparung als Anschlag ausgebildet, welcher mit einem korrespondierenden Anschlag des Quersteges zur Anlage kommt, welcher insbesondere durch die Rastnase der Zapfenausnehmung ausgebildet sein kann, womit eine vorteilhafte Weiterbildung der Ausgestaltung des Kettengliedes nach Anspruch 17 gegeben ist. Der Anschlag am Endbereich der Aussparung kann beispielsweise durch einen Vorsprung oder geeignete Gestaltung des Endbereiches der Aussparung ausgebildet sein, beispielsweise indem die Aussparung mit einem Stufenabsatz in die Zapfenaufnahme übergeht bzw. sich die Begrenzungsfläche der Aufnahme im Wesentlichen in radialer Richtung erstreckt oder gegebenenfalls am Endbereich der Ausnehmung eine Hinterschneidung vorgesehen ist. In der Anschlagposition des Quersteges (Öffnungsposition) kann der Quersteg im Wesentlichen in Verlängerung mit der Kettenlasche angeordnet sein, so dass der Verschwenkwinkel des Quersteges ca. 90° beträgt, vorzugsweise ist der Verschwenkwinkel des Quersteges größer 90°, beispielsweise ≥ 100° oder ≥ 120°, gegebenenfalls auch ≥ 180°, so dass der Quersteg in seiner Öffnungsposition ohne zusätzliche Mittel stabil gelagert ist. Die Rastnase der Zapfenaufnahme kann somit eine mehrfache Funktion aufweisen, zum einen in Bezug auf die Verhinderung eines Auswölbens des Quersteges, zum anderen als Anschlag in der Öffnungsposition des Quersteges.

Vorzugsweise ragt der der Kettenlascheninnenseite zugewandte Bereich der Zapfenaufnahme des Quersteges weiter von dem Quersteg in Richtung zum Kettengliedinneren ab, als der der Laschenaußenseite zugewandte Bereich der Zapfenaufnahme. Der weiter abragende Bereich der Zapfenaufnahme kein hierbei in Art einer Führung oder Einfädelungshilfe beim Aufrasten des Quersteges auf den Gelenkzapfen dienen. Ferner kann hierdurch eine zumindest im Wesentlichen durchgehende Innenseite des Kettengliedes auch im Übergangsbereich zwischen Quersteg und Kettenlascheninnenseite bereitgestellt werden. Hierdurch werden Beschädigungen, beispielsweise auch durch Abrieb, von dem Kettengliedinneren geführten Kabeln, Leitungen oder dergleichen beim Betrieb der Energieführungskette vermindert. Besonders bevorzugt schließt hierzu der der Kettenlascheninnenseite zugewandte Bereich der Zapfenaufnahme in Schließposition des Quersteges mit der Kettenlascheninnenseite ab, so dass die Kettengliedinnenseite im Übergangsbereich zwischen Quersteg und Kettenlasche bei geschlossenem Quersteg durchgehend und vorzugsweise spaltfrei ausgebildet ist.

Vorzugsweise sind im Übergangsbereich zwischen Quersteg und Kettenlasche auf der dem Kettengliedinneren zugewandten Seite derselben keine in das Kettengliedinnere vorstehenden Vorsprünge vorgesehen. Hierdurch wird ein Einbringen von Kabeln usw. in das Kettengliedinnere erleichtert und zudem eine Beschädigung von Kabeln, Leitungen usw. beim Betrieb der Energieführungskette, beispielsweise auch durch Abrieb, vermieden. Dies wird im Wesentlichen auch durch die erfindungsgemäße Ausbildung der Gelenkverbindung zwischen Quersteg und Kettenlasche, insbesondere auch durch den am Gelenkzapfen angeordneten Anschlag und die beschriebene Ausbildung des Quersteganschlages im Bereich der Gelenkzapfenaussparung erreicht.

Bevorzugt ist in Schließposition des Quersteges zwischen der Kettenlasche und dem zur Kettenlaschenaußenseite zugewandten Bereich der Zapfenaufnahme ein Schlitz zur Einführung eines Werkzeuges wie eines Schraubendrehers, vorgesehen, so dass durch Einführung des Werkzeuges in den Schlitz der Quersteg von dem Gelenkzapfen abhebelbar ist, um das Kettenglied zu öffnen.

Besonders bevorzugt sind an beiden gegenüberliegenden Endbereichen des jeweiligen Quersteges Gelenkverbindungen zwischen Quersteg und Kettenlasche vorgesehen und erfindungsgemäß ausgebildet. Der Quersteg kann hierdurch an beiden Endbereichen vom jeweiligen Gelenkzapfen gelöst bzw. das Kettenglied an beiden Endbereichen des Quersteges geöffnet werden. Hierdurch ist das Kettenglied beim Einführen oder der Entnahme von Kabeln, Leitungen oder dergleichen flexibel handhabbar. Ferner wird hierdurch einem Auswölben des Quersteges und einem unbeabsichtigten Lösen des Quersteges von den Kettenlaschen beim Betrieb der Energieführungskette wirksam entgegengewirkt.

Nach einer Variante bevorzugt ist nur einer der beiden gegenüberliegenden Querstege des Kettengliedes an zumindest einem oder an beiden Endbereichen desselben an einer Kettenlasche lösbar gelenkig gehaltert, in erfindungsgemäßer Ausbildung, und der gegenüberliegende Quersteg einstückig an den beiden Kettenlaschen angeformt. Die Stabilität des Kettengliedes wird hierdurch erhöht, insbesondere bei Kettengliedern geringer Größe. Nach einer anderen Variante können beide an einem Kettenglied gegenüberliegende Querstege von den Lachen lösbar, insbesondere erfindungsgemäß, ausgebildet sein so dass das Kettenglied von beiden Seiten her zu öffnen ist.

Ferner betrifft die Erfindung eine Energieführungskette mit mehreren gelenkig miteinander verbundenen Kettengliedern, welche jeweils erfindungsgemäß ausgebildet sind. Die Energieführungskette kann derart ausgestaltet sein, dass diese mit Obertrum, Untertrum und einem zwischen diesen angeordneten Umlenkbereich anordenbar ist. Das Ober- und Untertrum können hierbei gestreckt angeordnet sein, wobei sich benachbarte Kettenglieder miteinander im Anschlag befinden können. Im Umlenkbereich sind die Kettenglieder gegeneinander verschwenkt, also nicht in Anschlagposition zueinander.

Die Erfindung wird beispielhaft anhand der Figuren beschrieben. Es zeigen:
- Figur 1:: eine Seitenansicht eines erfindungsgemäßen Kettengliedes ohne Quersteg,
- Figur 2:: eine Querschnittsdarstellung des Kettengliedes gemäß Figur 1 (Figur 2a) sowie eine Detailansicht (Figur 2b),
- Figur 3:: eine Darstellung eines Quersteges des Kettengliedes nach Figur 1 in perspektivischer Darstellung (Figur 3a), in Draufsicht (Figur 3b), in Seitenansicht (Figur 3c), mit Detail desselben (Figur 3d), in Querschnittsdarstellung (Figur 3e) und als Detail desselben (Figur 3f),
- Figur 4:: ein Kettenglied gemäß Figur 1 mit Quersteg in Seitenansicht (Figur 4a), in Querschnittsdarstellung (Figur 4b) und Detailansicht (Figur 4c), jeweils mit Quersteg in Schließposition sowie gemäß Figur 4d und Figur 4e als Detailansicht mit Quersteg in teilweise geöffneter Stellung,
- Figur 5:: eine Teilansicht einer Kettenlasche mit Gelenkzapfen einer weiteren Ausführungsform,
- Figur 6:: eine Teilansicht eines Quersteges mit Zapfenaufnahme, welche zu dem Gelenkzapfen nach Figur 5 korrespondiert.

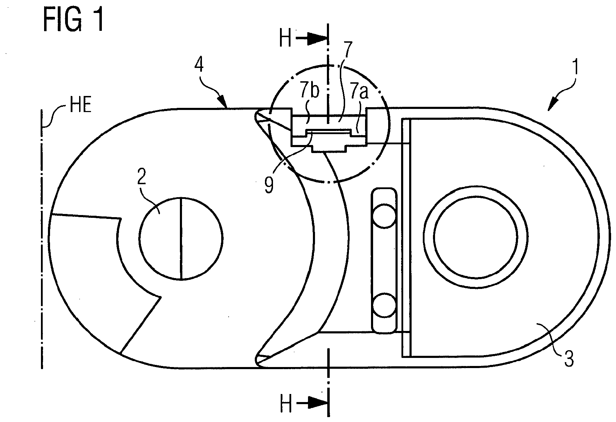

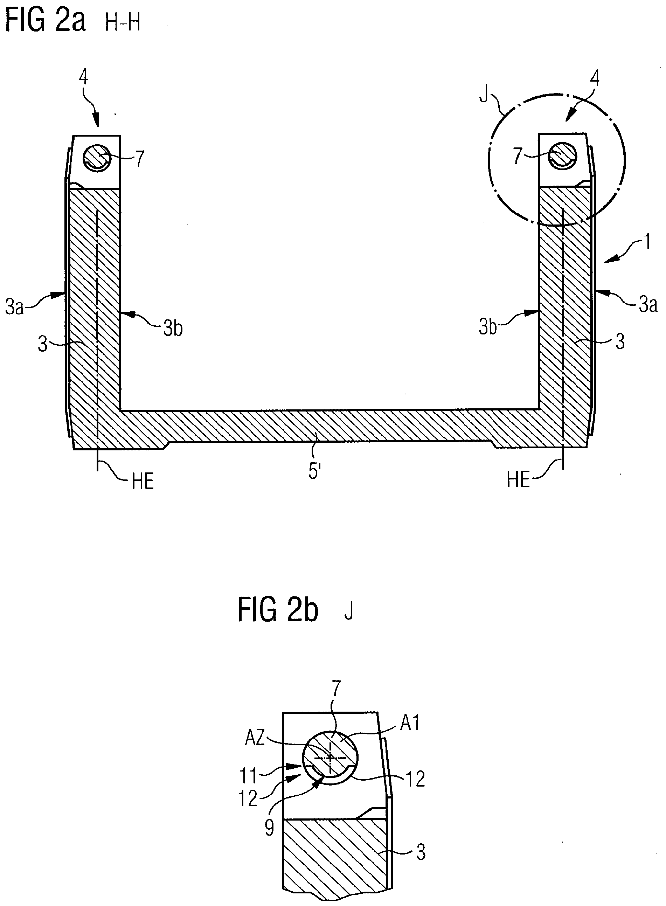

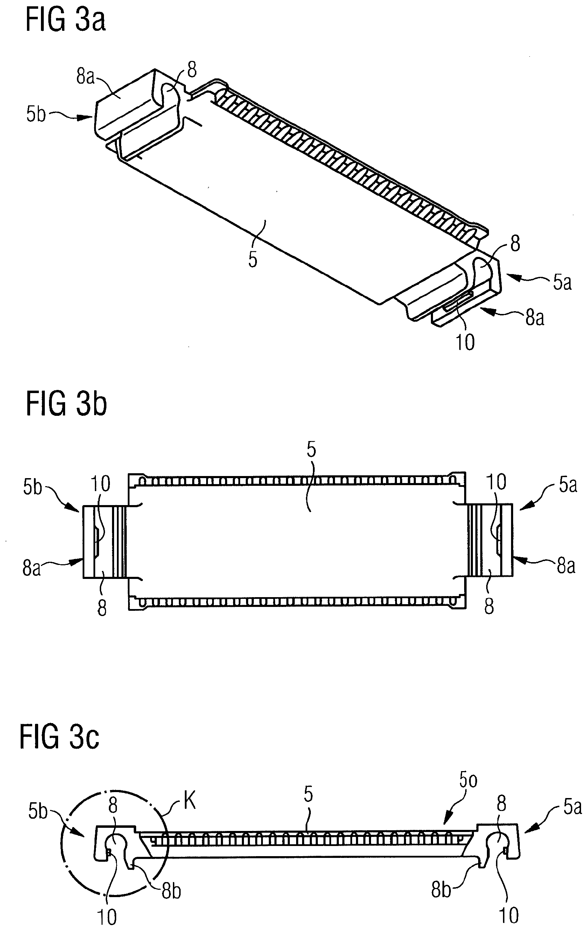

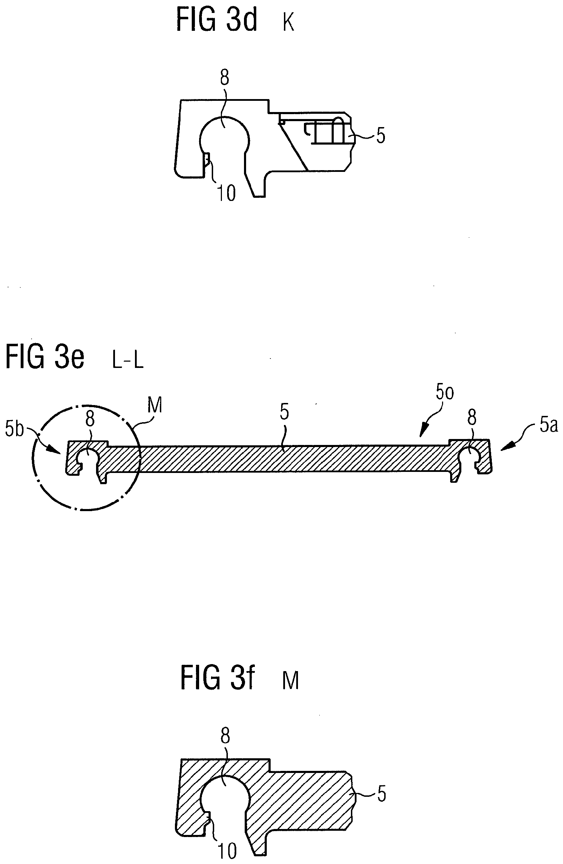

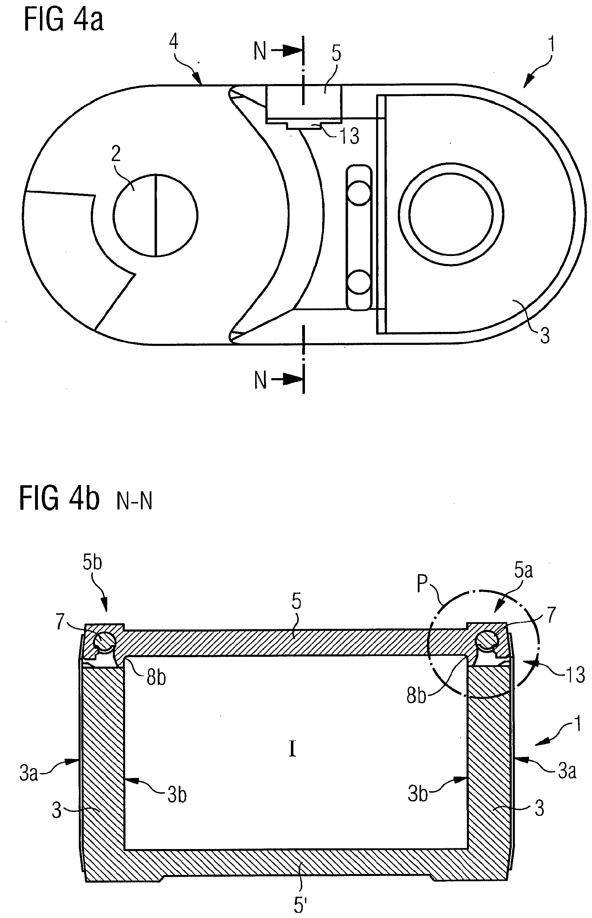

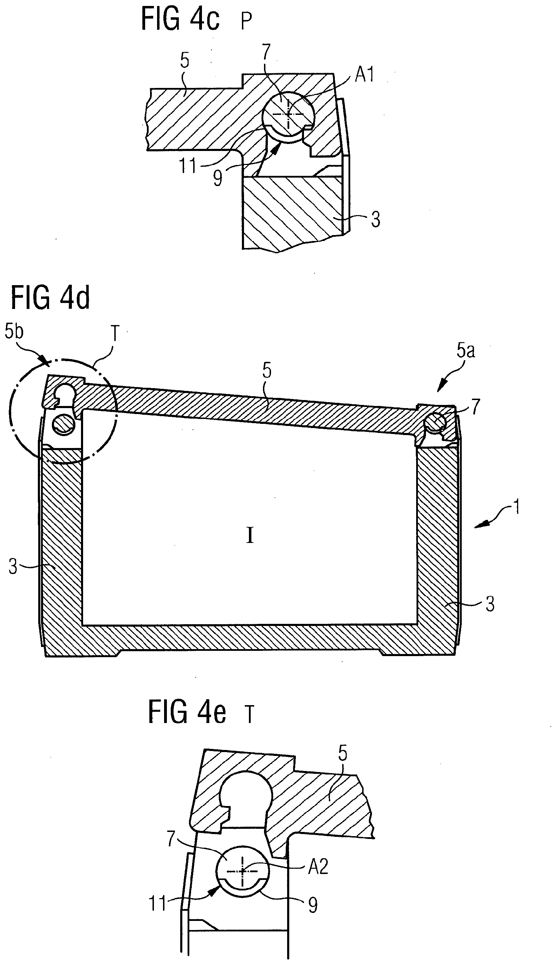

Die Figuren 1 bis 4 zeigen ein Kettenglied 1 gemäß einer ersten Ausführungsform bzw. Teile desselben für eine Energieführungskette zur Führung von Kabeln, Leitungen und dergleichen, wobei das Kettenglied Gelenkelemente 2 zur gelenkigen Verbindung mit baugleichen weiteren Kettengliedern zur Ausbildung der Energieführungskette aufweist. Das Kettenglied 1 weist zwei lateral voneinander beabstandete Kettenlaschen 3 mit diese begrenzenden, in Kettengliedlängsrichtung verlaufenden Schmalseiten 4 aufweist, und wenigstens einen, hier zwei, gegenüberliegende, die Kettenlaschen miteinander verbindende Querstege 5. Die Kettenlaschen weisen eine Hauptebene HE auf, welche parallel zur Kettengliedlängsrichtung damit auch parallel zur Kettenlängsrichtung verläuft und sich quer bzw. senkrecht zu den Querstegen erstreckt. Mindestens ein Quersteg 5 (hier genau einer) ist unter Ausbildung einer Gelenkverbindung gegenüber mindestens einer Kettenlasche verschwenkbar ausgebildet ist, gemäß dem Beispiel ist der Quersteg 5 gegenüber beiden Kettenlaschen 3 verschwenkbar ausgebildet bzw. mit beiden Laschen 3 gelenkig verbunden. Der Quersteg 5 ist unter Verschwenkung in eine die Kettenlaschen miteinander verbindende Schließposition (Fig. 4a, 4b) und in eine den Zwischenraum zwischen den Kettenlaschen 3 zumindest teilweise freigebende Öffnungsposition (Fig. 4d, 4e) überführbar. Die Gelenkverbindung zwischen Quersteg 5 und Kettenlasche 3 ist somit lösbar ausgebildet, was allgemein im Rahmen der Erfindung gelten kann. Zumindest ein verschwenkbar ausgebildeter Endbereich 5a, 5b des Quersteges 5 (hier beide Endbereiche 5a, 5b) ist rastend an der mit dem Quersteg gelenkig verbundenen Kettenlasche 3 festlegbar. Die Gelenkverbindung zwischen Quersteg 5 und Kettenlasche 3 umfasst jeweils einen Gelenkzapfen 7 und eine Zapfenaufnahme 8. Der Gelenkzapfen 7 ist im Wesentlichen zylindrisch mit einem Radius R1 über zumindest einen Teilumfang des Zapfens ausgebildet. Der Gelenkzapfen 3 ist hier an der Kettenlache 3 angeordnet bzw. an dieser angeformt. Die im Wesentlichen zylinderförmige korrespondierende Zapfenaufnahme 8 ist hier an dem Endbereich des Quersteges angeordnet.

Der Gelenkzapfen 7 weist zumindest über einen Teilbereich seiner Länge an der den Schmalseiten 4 abgewandten Zapfenseite (Zapfenunterseite) zumindest eine Aussparung 9 auf, welche von der Zylinderfläche mit Radius R1 des Zapfens 7 zurückspringt. Die Aussparung ist beispielhaft als Nut mit über deren Erstreckung konstanter Nuttiefe ausgebildet. Die Zapfenaufnahme 8 weist zumindest eine Rastnase 10 auf, welche von dem zylindrischen Bereich der Zapfenaufnahme mit Radius R1 vorspringt und in die Aussparung 9 eingreift. Ferner ist der Gelenkzapfen in einem anderen (zweiten) Teilbereich, welcher mit der Zapfenaufnahme mit Radius R1 zusammenwirkt, zylindrisch mit Radius R1, also mit kreisbogenförmigem Querschnitt, ausgebildet. Dieser zylindrische Teilbereich bildet hier die beiden Endbereiche 7a, 7b des Zapfens aus.

Ferner ist erfindungsgemäß zusätzlich zu der Gelenkverbindung zwischen Gelenkzapfen und Zapfenaufnahme mit Radius R1 ein Rastmittel vorgesehen, welches zwischen dem Quersteg 5 in seiner Schließposition und der Kettenlasche 3 rastend zusammenwirkt und den Verschwenkwinkel des Quersteges 5 in dessen Öffnungsposition begrenzt. Das Rastmittel ist hier durch oben genannte Rastnase 10 der Zapfenaufnahme ausgebildet. Das Widerlager des Rastmittels wird hier durch den Gelenkzapfen bereitgestellt, genauer gesagt durch den Endbereich der Aussparung 9 (bzw. den Aussparungsendbereich ausbildenden Gelenkzapfenbereich).

Der andere (zweite), zylindrisch ausgebildete Teilbereich des Zapfens wirkt mit der Zapfenaufnahme rastend zusammen. Die Zapfenaufnahme umgibt hierzu den zweiten Teilbereich des Zapfens über mehr als 180°, beispeilsweise ca. 300°. Da der andere (zweite) zylindrische Teilbereich des Zapfens und die Zapfenaufnahme über jeweils deren gesamte zusammenwirkende Breite den Radius R1 aufweisen, wirken andere (zweite) zylindrische Teilbereich des Zapfens und die Zapfenaufnahme spaltfrei zusammen, liegen also vollflächig aneinander an.

Die Aussparung 9 weist eine bogenförmige Oberflächenkontur auf, mit gleicher Krümmungsrichtung wie die der Zylinderfläche des Zapfens, im speziellen ist die Oberflächenkontur der Aussparung kreisbogenförmig mit Radius R2 ausgebildet, mit R2 kleiner als R1. Die Krümmungsachsen A1 und A2 der Aussparung bzw. der Zylinderfläche des Zapfens sind koaxial zueinander angeordnet sind. Die Krümmungsachse A2 des Zapfens (Zylinderachse) bildet die Verschwenkachse des Quersteges 5 aus. Die Aussparung 9 erstreckt sich über mehr als 90° des Gelenkzapfenumfanges, bspw. bis zu ca. 120°.

Die in die Aussparung 9 eingreifende Rastnase 10 ist an der Außenseite 3a der Lasche zugewandten Seite 8a der Zapfenaufnahme angeordnet.

Die in die Aussparung 9 eingreifende Rastnase 10 liegt zumindest über einen Teil oder hier die gesamte Verschwenkbewegung des Quersteges an dem Gelenkzapfen an, genauer gesagt an der gekrümmten Begrenzungsfläche der Aussparung 9.

Ferner ist ein Anschlag 11 zur Begrenzung des Verschwenkwinkels des Quersteges in seiner Öffnungsposition vorgesehen, welcher hier durch den Endbereich 12 der Aussparung ausgebildet ist.

Die Aussparung 9 und die in diese eingreifende Rastnase 10 sind beabstandet von den Endbereichen 7a, 7b des Gelenkzapfens angeordnet, wobei der Gelenkzapfen an seinen beiden Endbereichen 7a, 7b zylindrisch mit Radius 1 ausgebildet ist.

Die Aussparung und der Gelenkzapfen sind hierbei über den Teilbereich der jeweiligen Längserstreckung, in welchem Zapfen und Zapfenaufnahme zusammenwirken, spiegelsymmetrisch zur Längsachse des Quersteges ausgebildet.

Der Teilbereich des Zapfens mit zurückspringender Aussparung und der zylindrische (zweite) Teilbereich des Zapefns erstrecken sich jeweils über ca. 40-60% der Längserstreckung des Zapfens.

Der der Kettenlascheninnenseite zugewandte Bereich 8b der Zapfenaufnahme 8 des Quersteges 5 ragt weiter von dem Quersteg in Richtung zum Kettengliedinneren I ab als der der Kettenlaschenaußenseite zugewandte Bereich 8a der Zapfenaufnahme. Der der Kettenlascheninnenseite zugewandte Bereich 8b der Zapfenaufnahme 8 schließt in Schließposition des Quersteges mit der Kettenlascheninnenseite 3b ab. Die Oberseite 5o der Querstege 5 ist insbesondere auch im Bereich der Zapfenaufnahmen 8 geschlossen bzw. durchbrechungsfrei ausgeführt.

In Schließposition des Quersteges 5 ist zwischen der Kettenlasche 3 und dem zur Kettenlaschenaußenseite zugewandten Bereich der Zapfenaufnahme ein Schlitz 13 zur Einführung eines Werkzeuges vorgesehen, mittels dessen der Quersteg unter Lösung der Zapfenaufnahme von dem Gelenkzapfen aufhebelbar ist.

Der Quersteg 5 ist an beiden Endbereichen 5a, 5b mit erfindungsgemäßen Gelenkverbindungen ausgebildet. Die beiden Gelenkbereiche an den Querstegenden sind vorzugsweise baugleich ausgebildet. Nur einer der beiden gegenüberliegenden Querstege des Kettengliedes ist an beiden Endbereichen (oder ggf. nur einem Endbereich) desselben an der Kettenlasche 3 gelenkig gehaltert. Der gegenüberliegende Quersteg 5' ist einstückig an den Kettenlaschen 3 angeformt.

Wie im Ausführungsbeispiel können allgemein im Rahmen der Erfindung beide Kettenlaschen spiegelbildlich (und ansonsten baugleich) zueinander ausgebildet sein.

Durch Verbindung der Kettenglieder 1 mit den Gelenkelementen 2 kann eine Energieführungskette mit mehreren zueinander abwinkelbaren Kettengliedern zusammengefügt sein. Beispielsweise kann die Kette mit Obertrum und ein Untertrum und mit Ober- und Untertrum verbindendem gekrümmten Umlenkbereich anordenbar oder angeordnet sein, wie dies allgemein bekannt ist, ohne hierauf beschränkt zu sein.

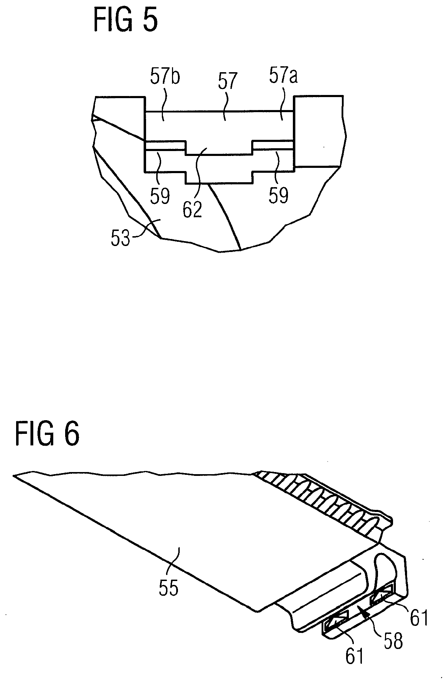

Die Figuren 5 und 6 zeigen eine Kettenlasche 53 mit Gelenkzapfen 57 und einen korrespondierenden Quersteg 55 mit Zapfenaufnahme 58 in Abwandlung des Ausführungsbeispiels der Figuren 1-4, im Übrigen sei hierzu auf die obigen Ausführungen zu den Figuren 1-4 entsprechend verwiesen, auch in Bezug auf die weiteren Ausführungen des Kettengliedes und der Energieführungskette.

Nach diesem Ausführungsbeispiel sind an beiden Endbereichen 57a, 57b des Gelenkzapfens 57 jeweils eine Aussparung 59 und eine in diese eingreifende Rastnase 61 der Zapfenaufnahme 58 angeordnet. Es versteht sich, dass die an den Endbereichen des Zapfens angeordneten Rastnasen an der Zapfenaufnahme auf Höhe des Endbereichs des Zapfens angeordnet sind. Der Gelenkzapfen 57 ist hierbei an einem Teilbereich 62, welcher von den beiden Endbereichen 57a, 57b des Zapfens verschieden ist, zylindrisch ausgebildet, weist also einen kreisbogenförmigen Querschnitt mit Radius R1 auf. Der zylindrische Teilbereich 62 des Zapfens 58 ist hier also im mittleren Bereich des Zapfens angeordnet. Die Merkmale dieser Ausführungsbeispiele können jeweils unabhängig voneinander oder in Kombination miteinander allgemein im Rahmen der Erfindung gelten.

## Patentansprüche

1. Kettenglied für eine Energieführungskette zur Führung von Kabeln, Leitungen und dergleichen, wobei das Kettenglied (1) Gelenkelemente (2) zur gelenkigen Verbindung mit baugleichen weiteren Kettengliedern (1) zur Ausbildung der Energieführungskette aufweist, wobei das Kettenglied (1) zwei lateral voneinander beabstandete Kettenlaschen (3) mit diese begrenzenden, in Kettengliedlängsrichtung verlaufenden Schmalseiten (4) aufweist, und wenigstens einen die Kettenlaschen (3) miteinander verbindende Querstege (5) aufweist, wobei mindestens ein Quersteg (5) unter Ausbildung einer Gelenkverbindung gegenüber mindestens einer Kettenlasche (3) verschwenkbar ausgebildet ist und unter Verschwenkung in eine die Kettenlaschen (3) miteinander verbindende Schließposition und in eine den Zwischenraum zwischen den Kettenlaschen (3) zumindest teilweise freigebende Öffnungsposition überführbar ist, wobei zumindest ein verschwenkbar ausgebildeter Endbereich des Quersteges rastend an der mit dem Quersteg gelenkig verbundenen Kettenlasche festlegbar ist, und wobei die Gelenkverbindung zwischen Quersteg (5) und Kettenlasche (3) einen im wesentlichen zylindrischen Gelenkzapfen (7) mit einem Radius R1 über zumindest einen Teilumfang des Zapfens (7) an einem der korrespondieren Bauteile von Quersteg (5) und Kettenlasche (3) und eine im wesentlichen zylinderförmige Zapfenaufnahme (8) an dem anderen der beiden korrespondierenden Bauteile (5,3) aufweist, und wobei der Gelenkzapfen (7) über einen Teilbereich seiner Länge an der den Schmalseiten (4) abgewandten Zapfenseite zumindest eine Aussparung (9) aufweist, welche von der Zylinderfläche des Zapfens (7) zurückspringt, und die Zapfenaufnahme (8) zumindest eine Rastnase (10) aufweist, welche von dem zylindrischen Bereich der Zapfenaufnahme (8) mit Radius R1 vorspringt und in die Aussparung (9) eingreift, **dadurch gekennzeichnet, dass** der Gelenkzapfen (7) nur über einen Teilbereich seiner Länge an der den Schmalseiten (4) abgewandten Zapfenseite mit der zumindest einen Aussparung (9), welche von der Zylinderfläche des Zapfens (7) zurückspringt, versehen ist, und dass der Gelenkzapfen (7) in einem anderen Teilbereich, welcher mit der Zapfenaufnahme (8) zusammenwirkt, zylindrisch ausgebildet ist.

2. Kettenglied nach Anspruch 1, **dadurch gekennzeichnet, dass** der andere, zylindrisch ausgebildete Teilbereich des Zapfens (7) mit der Zapfenaufnahme (8) rastend zusammenwirkt.

3. Kettenglied nach einem der Ansprüche 1 oder 2, **dadurch gekennzeichnet, dass** die Aussparung (9) und die in diese eingreifende Rastnase (10) nur beabstandet von den Endbereichen des Gelenkzapfens (7) angeordnet sind und dass der Gelenkzapfen (7) an seinen beiden Endbereichen (7a,7b) zylindrisch ausgebildet ist.

4. Kettenglied nach einem der Ansprüche 1 oder 2, **dadurch gekennzeichnet, dass** die Aussparung (9) und die in diese eingreifende Rastnase (10) an zumindest einem oder an beiden Endbereichen (7a,7b) des Gelenkzapfens (7) angeordnet sind und dass der Gelenkzapfen (7) an einem Teilbereich, welcher von einem oder beiden Endbereichen (7a,7b) des Zapfens (7) verschieden ist, zylindrisch ausgebildet ist.

5. Kettenglied nach einem der Ansprüche 1 bis 4, **dadurch gekennzeichnet, dass** die Aussparung (9) und der Gelenkzapfen (7) über den Teilbereich der jeweiligen Längserstreckung, in welchem Zapfen (7) und Zapfenaufnahme (8) zusammenwirken, spiegelsymmetrisch zur Längsachse des Quersteges (5) ausgebildet sind.

6. Kettenglied nach einem der Ansprüche 1 bis 5, **dadurch gekennzeichnet, dass** die Aussparung (9) eine bogenförmige Oberflächenkontur aufweist, mit gleicher Krümmungsrichtung wie die der Zylinderfläche des Zapfens (7) .

7. Kettenglied nach Anspruch 6, **dadurch gekennzeichnet, dass** die Oberflächenkontur der Aussparung (9) kreisbogenförmig mit einem Radius R2 ausgebildet ist, wobei R2 kleiner R1 ist.

8. Kettenglied nach Anspruch 6 oder 7, **dadurch gekennzeichnet, dass** die Krümmungsachsen der Aussparung und der Zylinderfläche des Zapfens koaxial zueinander angeordnet sind.

9. Kettenglied nach einem der Ansprüche 1 bis 8, **dadurch gekennzeichnet, dass** die in die Aussparung (9) eingreifende Rastnase (10) an der der'Außenseite der Lasche (3) zugewandten Seite der Zapfenaufnahme (8) angeordnet ist.

10. Kettenglied nach einem der Ansprüche 1 bis 9, **dadurch gekennzeichnet, dass** die in die Aussparung (9) eingreifende Rastnase (10) zumindest über einen Teil oder die gesamte Verschwenkbewegung des Quersteges (5) an dem Gelenkzapfen (7) anliegt.

11. Kettenglied nach einem der Ansprüche 1 bis 10, **dadurch gekennzeichnet, dass** ein Anschlag (11) zur Begrenzung des Verschwenkwinkels des Quersteges (5) in seiner Öffnungsposition vorgesehen ist.

12. Kettenglied nach einem der Ansprüche 1 bis 11, **dadurch gekennzeichnet, dass** der der Kettenlascheninnenseite (3b) zugewandte Bereich (8b) der an dem Quersteg (5) vorgesehenen Zapfenaufnahme (8) weiter von dem Quersteg (5) in Richtung zum Kettengliedinneren (I) abragt als der der Kettenlaschenaußenseite zugewandte Bereich (8a) der Zapfenaufnahme (8).

13. Kettenglied nach einem der Ansprüche 1 bis 12, **dadurch gekennzeichnet, dass** der der Kettenlascheninnenseite (3b) zugewandte Bereich (8b) der Zapfenaufnahme (8) in Schließposition des Quersteges (5) mit der Kettenlascheninnenseite (3b) abschließt.

14. Kettenglied nach einem der Ansprüche 1 bis 13, **dadurch gekennzeichnet, dass** in Schließposition des Quersteges (5) zwischen der Kettenlasche (3) und dem zur Kettenlaschenaußenseite zugewandten Bereich (8a) der Zapfenaufnahme (8) ein Schlitz (13) zur Einführung eines Werkzeuges vorgesehen ist, mittels dessen der Quersteg (5) unter Lösung der Zapfenaufnahme (8) von dem Gelenkzapfen (5) aufhebelbar ist.

15. Kettenglied nach einem der Ansprüche 1 bis 14, **dadurch gekennzeichnet, dass** an beiden gegenüberliegenden Endbereichen (5a,5b) des Quersteges (5) die Gelenkverbindung zwischen Quersteg (5) und Kettenlasche (3) mit einer Aussparung (9) des Gelenkzapfens (7) und einer in diese eingreifenden Rastnase (10) der Zapfenaufnahme (8) ausgebildet ist.

16. Kettenglied nach einem der Ansprüche 1 bis 15, **dadurch gekennzeichnet, dass** nur einer der beiden gegenüberliegenden Querstege (5) des Kettengliedes an zumindest einem oder an beiden Endbereichen (5a,5b) desselben an einer Kettenlasche (3) lösbar gelenkig gehaltert ist und der gegenüberliegende Quersteg (5) einstückig an den Kettenlaschen (3) angeformt ist.

17. Kettenglied nach einem der Ansprüche 1 bis 16, **dadurch gekennzeichnet, dass** zusätzlich zu der Gelenkverbindung zwischen Gelenkzapfen (7) und Zapfenaufnahme (8) mit Radius R1 Rastmittel (10) vorgesehen sind, welche zwischen dem Quersteg (5) in seiner Schließposition und der Kettenlasche (3) rastend zusammenwirken und dass diese zusätzlichen Rastmittel (10) den Verschwenkwinkel des Quersteges (5) in dessen Öffnungsposition begrenzen.

18. Energieführungskette mit mehreren gelenkig miteinander verbundenen Kettengliedern (1) gemäß einem der Ansprüche 1 bis 17.

## Claims

1. A chain link for an energy guiding chain for guiding cables, lines and the like, wherein the chain link (1) has hinge members (2) for hinged connection to further chain links (1) of the same structure for providing the energy guiding chain, wherein the chain link (1) has two laterally mutually spaced chain plates (3) having narrow sides (4) delimiting same and extending in the longitudinal direction of the chain link, and at least one transverse bar (5) connecting the chain plates (3) together, wherein at least one transverse bar (5) is adapted to be pivotable forming a hinge connection in relation to at least one chain plate (3) and can be transferred by pivotal movement into a closed position of connecting the chain plates (3) together and into an open position at least partially opening the intermediate space between the chain plates (3), wherein at least one pivotable end region of the transverse bar can be latchingly fixed to the chain plate hingedly connected to the transverse bar, and wherein the hinge connection between the transverse bar (5) and the chain plate (3) has a substantially cylindrical hinge pin (7) of the radius R1 over at least a part of the periphery of the pin (7) at one of the corresponding components of the transverse bar (5) and the chain link (3) and a substantially cylindrical pin receiving means (8) at the other of the two corresponding components (5, 3), and wherein the hinge pin (7) has at least one recess (9) over a portion of its length at the pin side that is remote from the narrow sides, which recess is set back from the cylindrical surface of the pin (7), and the pin receiving means (8) has at least one latching nose (10) which projects from the cylindrical region of the pin receiving means (8) of the radius R1 and engages into the recess (9), **characterised in that** the hinge pin (7) is provided with the at least one recess (9) only over a portion of its length at the pin side that is remote from the narrow sides (4), which recess is set back from the cylindrical surface of the pin (7), and that the hinge pin (7) is of a cylindrical configuration in another portion which cooperates with the pin receiving means (8).

2. A chain link as set forth in claim 1 **characterised in that** the other cylindrical portion of the pin (7) latchingly cooperates with the pin receiving means (8).

3. A chain link as set forth in one of claims 1 and 2 **characterised in that** the recess (9) and the latching nose (10) engaging into same are arranged only spaced from the end regions of the hinge pin (7) and that the hinge pin (7) is of a cylindrical configuration at its two end regions (7a, 7b).

4. A chain link as set forth in one of claims 1 and 2 **characterised in that** the recess (9) and the latching nose (10) engaging into same are arranged at at least one or at both end regions (7a, 7b) of the hinge pin (7) and the hinge pin (7) is of a cylindrical configuration at a portion which is different from one or both end regions (7a, 7b) of the pin (7).

5. A chain link as set forth in one of claims 1 through 4 **characterised in that** the recess (9) and the hinge pin (7) are of a mirror image-symmetrical configuration relative to the longitudinal axis of the transverse bar (5) over the portion of the respective longitudinal extent, in which the pin (7) and the pin receiving means (8) cooperate.

6. A chain link as set forth in one of claims 1 through 5 **characterised in that** the recess (9) has an arcuate surface contour, with the same direction of curvature as that of the cylindrical surface of the pin (7).

7. A chain link as set forth in claim 6 **characterised in that** the surface contour of the recess (9) is in the shape of a circular arc of a radius R2, R2 being smaller than R1.

8. A chain link as set forth in claim 6 or claim 7 **characterised in that** the axes of curvature of the recess and the cylindrical surface of the pin are arranged in mutually coaxial relationship.

9. A chain link as set forth in one of claims 1 through 8 **characterised in that** the latching nose (10) engaging into the recess (9) is arranged at the side of the pin receiving means (8), that faces towards the outside of the plate (3).

10. A chain link as set forth in one of claims 1 through 9 **characterised in that** the latching nose (10) engaging into the recess (9) bears against the hinge pin (7) at least over a part or the entire pivotal movement of the transverse bar (5).

11. A chain link as set forth in one of claims 1 through 10 **characterised in that** there is provided an abutment (11) for delimiting the pivotal angle of the transverse bar (5) in its open position.

12. A chain link as set forth in one of claims 1 through 11 **characterised in that** the region (8b) that is towards the inside of chain plate (3b) of the pin receiving means (8) provided on the transverse bar (5) projects from the transverse bar (5) in the direction towards the chain link interior (I) further than the region (8a) of the pin receiving means (8), that is towards the chain plate outside.

13. A chain link as set forth in one of claims 1 through 12 **characterised in that** the region (8b) of the pin receiving means (8), that is towards the chain link inside, terminates with the chain plate inside (3b) in the closed position of the transverse bar (5).

14. A chain link as set forth in one of claims 1 through 13 **characterised in that** a slot (13) for introducing a tool is provided in the closed position of the transverse bar (5) between the chain plate (3) and the region (8a) of the pin receiving means (8), that is towards the chain plate outside, by means of which tool the transverse bar (5) can be levered off the hinge pin (5) to release the pin receiving means (8).

15. A chain link as set forth in one of claims 1 through 14 **characterised in that** at both mutually opposite end regions (5a, 5b) of the transverse bar (5) the hinge connection between the transverse bar (5) and the chain plate (3) is provided with a recess (9) in the hinge pin (7) and a latching nose (10) of the pin receiving means (8), that engages into the recess (9).

16. A chain link as set forth in one of claims 1 through 15 **characterised in that** only one of the two opposite transverse bars (5) of the chain link is hingedly held releasably to a chain plate (3) at at least one or both end regions (5a, 5b) of the chain link and the opposite transverse bar (5) is formed integrally on the chain plates (3).

17. A chain link as set forth in one of claims 1 through 16 **characterised in that** in addition to the hinge connection between the hinge pin (7) and the pin receiving means (8) of the radius R1 there are provided latching means (10) which latchingly cooperate between the transverse bar (5) in its closed position and the chain plate (3) and that said additional latching means (10) limit the pivotal angle of the transverse bar (5) in the open position thereof.

18. An energy guiding chain having a plurality of hingedly interconnected chain links (1) as set forth in one of claims 1 through 17.

## Revendications

1. Maillon de chaîne pour chaîne porte câbles pour guider des câbles, des lignes et analogues, dans lequel le maillon de chaîne (1) présente des éléments d'articulation (2) pour une liaison articulée avec d'autres maillons de chaîne (1) de construction identique pour former la chaîne porte câbles, dans lequel le maillon de chaîne (1) présente deux pattes de chaîne (3) à écartement latéral avec des côtés étroits (4) les délimitant et s'étendant dans la direction longitudinale du maillon de chaîne, et présente au moins une âme transversale (5) reliant entre elles les pattes de chaîne (3), dans lequel au moins une âme transversale (5) est formée de manière à pouvoir pivoter par rapport à au moins une patte de chaîne (3) tout en formant une liaison articulée et peut être transférée, par pivotement, dans une position de fermeture reliant les pattes de chaîne (3) entre elles et dans une position d'ouverture libérant au moins partiellement l'espace entre les pattes de chaîne (3), où au moins une partie d'extrémité pivotante de l'âme transversale peut être fixée par encliquetage sur la patte de chaîne articulée à l'âme transversale et où la liaison articulée entre l'âme transversale (5) et la patte de chaîne (3) présente un axe d'articulation (7) sensiblement cylindrique avec un rayon R1 sur au moins une circonférence partielle de l'axe (7) sur l'une des composantes correspondantes de l'âme transversale (5) et du maillon de chaîne (3) et un logement d'axe (8) sensiblement cylindrique sur l'autre des deux composantes correspondantes (5, 3), et dans lequel l'axe d'articulation (7) présente, seulement sur une partie de sa longueur sur le côté de l'axe opposé aux côtés étroits (4), au moins un évidement (9) qui est en retrait par rapport à la surface cylindrique de l'axe (7), et le logement de l'axe (8) présente au moins un ergot d'arrêt (10) qui fait saillie de la partie cylindrique du logement d"axe (8) avec rayon R1 et s'engage dans cet évidement (9), **caractérisé en ce que** l'axe d'articulation (7) est muni seulement sur une partie de sa longueur, sur le côté de l'axe détourné des côtés étroits, d'au moins l'un évidement (9) qui est en retrait par rapport à la surface cylindrique de l'axe (7), et **en ce que** l'axe d'articulation (7) est cylindrique dans une autre partie qui interagit avec le logement d'axe (8).

2. Maillon de chaîne selon la revendication 1, **caractérisé en ce que** l'autre partie de forme cylindrique de l'axe (7) interagit de manière verrouillée avec le logement d'axe (8).

3. Maillon de chaîne selon l'une des revendications 1 ou 2, **caractérisé en ce que** l'évidement (9) et l'ergot d'arrêt (10) qui s'engage dans celui-ci ne sont disposés qu'à une distance des parties d'extrémité de l'axe d'articulation (7) et **en ce que** l'axe d'articulation (7) est cylindrique à ses deux extrémités (7a, 7b).

4. Maillon de chaîne selon l'une des revendications 1 ou 2, **caractérisé en ce que** l'évidement (9) et l'ergot d'arrêt (10) qui s'engage dans celui-ci sont disposés à au moins une ou à deux parties d'extrémité (7a, 7b) de l'axe d'articulation (7) et que l'axe d'articulation (7) est cylindrique dans une zone partielle qui est différente d'une ou des deux parties d'extrémité (7a, 7b) de l'axe (7).

5. Maillon de chaîne selon l'une des revendications 1 à 4, **caractérisé en ce que** l'évidement (9) et l'axe d'articulation (7) sont réalisés symétriquement par rapport à l'axe longitudinal de l'âme transversale (5) sur la zone partielle de l'extension longitudinale respective, dans laquelle l'axe (7) et le logement d'axe (8) coopèrent.

6. Maillon de chaîne selon l'une des revendications 1 à 5, **caractérisé en ce que** l'évidement (9) présente un contour de surface arqué avec la même direction de courbure que celle de la surface cylindrique de l'axe (7).

7. Maillon de chaîne selon la revendication 6, **caractérisé en ce que** le contour de surface de l'évidement (9) est formé en arc de cercle avec un rayon R2, où R2 est inférieur à R1.

8. Maillon de chaîne selon la revendication 6 ou 7, **caractérisé en ce que** les axes de courbure de l'évidement et la surface cylindrique de l'axe sont disposés coaxialement l'un par rapport à l'autre.

9. Maillon de chaîne selon l'une des revendications 1 à 8, **caractérisé en ce que** l'ergot d'arrêt (10) s'engageant dans l'évidement (9) est disposée sur le côté du logement d'axe (8) tourné vers l'extérieur de la patte (3).

10. Maillon de chaîne selon l'une des revendications 1 à 9, **caractérisé en ce que** l'ergot d'arrêt (10) s'engageant dans l'évidement (9) s'appuie contre l'axe d'articulation (7) au moins sur une partie ou la totalité du mouvement de pivotement de l'âme transversale (5).

11. Maillon de chaîne selon l'une des revendications 1 à 10, **caractérisé en ce qu'**une butée (11) est prévue pour limiter l'angle de pivotement de l'âme transversale (5) dans sa position d'ouverture.

12. Maillon de chaîne selon l'une des revendications 1 à 11, **caractérisé en ce que** la zone (8b) tournée vers l'intérieur de la patte de maillon de chaîne (3b) du logement (8) de l'axe d'articulation prévu sur l'âme transversale (5) fait saillie de l'âme transversale (5) dans la direction vers l'intérieur (I) du maillon de chaîne plus loin que la zone (8a) du logement (8) de l'axe d'articulation tournée vers l'extérieur de la patte de maillon de chaîne.

13. Maillon de chaîne selon l'une des revendications 1 à 12, **caractérisé en ce que** la zone (8b) du logement (8) de l'axe tournée vers le côté intérieur (3b) de la patte de maillon de chaîne se termine par le côté intérieur (3b) de la patte de maillon de chaîne en position fermée de l'âme transversale (5).

14. Maillon de chaîne selon l'une des revendications 1 à 13, **caractérisé en ce que**, dans la position fermée de l'âme transversale (5), entre la patte de maillon (3) et la zone (8a) du logement (8) de l'axe tournée vers l'extérieur de la patte de maillon de chaîne, une fente (13) est prévue pour introduire un outil, au moyen duquel l'âme transversale (5) peut être ouverte par levier en libérant le logement (8) de l'axe de l'axe d'articulation (5).

15. Maillon de chaîne selon l'une des revendications 1 à 14, **caractérisé en ce que**, aux deux extrémités opposées (5a, 5b) de l'âme transversale (5), la liaison entre l'âme transversale (5) et la patte de chaîne (3) est réalisée avec un évidement (9) dans l'axe d'articulation (7) et un ergot d'arrêt (10) du logement (8) de l'axe s'engageant dans celui-ci.

16. Maillon de chaîne selon l'une des revendications 1 à 15, **caractérisé en ce que** seulement l'une des deux âmes transversales opposées (5) du maillon de chaîne est articulée de manière amovible sur un maillon de chaîne dans au moins une de ses régions ou dans ses deux régions d'extrémité (5a, 5b) et l'âme transversale opposée (5) est formée d'un seul tenant par rapport aux maillons de chaîne (3).

17. Maillon de chaîne selon l'une des revendications 1 à 16, **caractérisé en ce qu'**il est prévu, en plus de la liaison articulée entre l'axe d'articulation (7) et le logement (8) de l'axe d'articulation avec rayon R1, des moyens de verrouillage (10) qui interagissent de manière verrouillée entre l'âme transversale (5) dans sa position fermée et la patte de chaîne (3), et **en ce que** ces moyens de verrouillage supplémentaires (10) délimitent l'angle de pivotement de l'âme transversale (5) dans sa position ouverte.

18. Chaîne porte-câbles comportant plusieurs maillons de chaîne (1) reliés entre eux de manière articulée selon l'une des revendications 1 à 17.
